# EUROPÄISCHE PATENTANMELDUNG

(11) **EP 1 104 707 A1**
(43) Veröffentlichungstag der Anmeldung: **06.06.2001**
(21) Anmeldenummer: 99123894.0
(22) Anmeldetag: 02.12.1999
(51) Int. Cl.: B60B 3/04, B60B 3/10, B60B 25/00

(54) **Fahrzeugrad**

(71) Anmelder: RTR - Rädertechnik Romkes GmbH, 90478 Nürnberg (DE)
(72) Erfinder: Romkes, Gerhard, 90478 Nürnberg (DE)

(57) **Zusammenfassung**

Die Erfindung bezieht sich auf ein gegossenes Rad für ein Fahrzeug, beispielsweise aus Aluminium, das durch den Einsatz unterschiedlicher Adapter, sogen. Compounds (4) an die unterschiedlichsten Fahrzeugtypen anpassbar ist, wobei das Rad aus mehreren Teilen zusammengesetzt ist und diese Teile miteinander unlösbar beispielsweise mittels Schrauben (8) oder dergl. verbunden sind, wobei die Nahtstellen der Einzelteile konisch ausgebildet sein können.

## Beschreibung

Die Erfindung bezieht sich auf ein Fahrzeugrad aus Leichtmetall, beispielsweise aus Aluminium, das aus mehreren Teilen zusammengesetzt ist.

Aus mehreren Teilen zusammengesetzte Räder für Fahrzeuge, insbesondere solche aus Aluminium, werden dann benötigt, wenn Räder an verschiedene Fahrzeuge adaptiert werden müssen. Unterschiedliche Fahrzeugtypen, auch innerhalb eines Kfz-Herstellers, weisen verschiedene Lochkreisdurchmesser. Einpresstiefen, Radbefestigungen mit unterschiedlichen Schrauben. Anzahl der Schrauben usw. auf. Selbst die Mittelbohrungen unterscheiden sich von Fahrzeugtyp zu Fahrzeugtyp, wodurch die Zentrierflächen der einander zugewandten Tragflächen der Befestigungsvorrichtungen am Fahrzeug u.U. die Radklemmlast negativ beeinflussen. Diese Vielfalt von Rädern und Radteilen bedingt das Vorhalten größerer Mengen unterschiedlicher Räder, was wiederum unangemessen große Lagerflächen bedingt. Außerdem steigt der Organisationsaufwand in der Lagerhaltung von Einzelteilen erheblich.

Um diesen Übelstand zu begegnen liegen bereits mehrere Vorschläge vor. Diese sind aber auch noch mit diversen Nachteilen behaftet.

So offenbart z.B. die DE 32 33 802 Al ein Felgenrad bei dem mittels unterschiedlicher mit dessen Lochkreis kombinierbarer Zentrierringe das gleiche Rad für unterschiedliche Fahrzeugtypen einsetzbar ist Mit der DE 33 33 785 C2 wird eine Befestigungsvorrichtung für das Montieren von Fahrzeugrädern vorgeschlagen, bei dem ein Befestigungskörper mit einem Klemmring kombiniert ist und die Tragflächen des Klemmringes, des Befestigungskörpers konisch ausgebildet sind, dies läßt eine gewisse Aufrechterhaltung der unbedingt erforderlichen Klemmlast zu.

Auch die DE 42 15 072 A1 zeigt ein Felgenrad, bei dem im Flansch desselben eine Durchbrechung vorgesehen ist, durch die Befestigungsteile verschiedener Lochkreise und/oder Lochzahl durchführbar sind, wobei im Rad ein Adapter mit festem Lochkreis vorgesehen ist durch den das Rad am Fahrzeug befestigbar ist. Mit der DE 44 37 607 A1 wird ein Felgenadapter vorgeschlagen, der zum Ausgleich unterschiedlicher Lochkreise, Nabenlochbohrungen und Einpreßtiefen mit in die Lochkreisbohrungen passend eingreifende Vorsprünge aufweist und zwischen Nabe und Felge angeordnet ist. Mit dem DE GM 93 10 638.6 wird ein Zentrierungssystem vorgeschlagen, mit dessen Hilfe Felgen mit maximal zwei Zentralbohrungen zu fertigen und diese entsprechend dem Fahrzeugtyp mit passendem Zentrierring auszustatten. Zu diesem Zweck wird der Zentrierring in eine einheitliche Zentrierbohrung einer Leichtmetallfelge gepresst.

Die DE PS 801 007 offenbart ein Laufrad aus Stahl für luftbereifte Fahrzeuge das aus zwei Felgenhälften besteht, die durch einen Schraubenbolzen gegeneinander gezogen werden und miteinander und dem Nabenflansch stumpf verschweißt sind.

Aus der DE 41 41 868 A1 geht ein weiteres Fahrzeugrad aus Stahl hervor, das eine dreiteilige Sandwichbauweise aufweist, wobei die einzelnen Schichten miteinander durch Schrauben und Muttern verklemmt sind und eine Schweißdichtung vorgesehen ist.

Die DE 42 23 290 A1 beschreibt das Herstellungsverfahren eines Verbund-Kunststoffharzrades, das ein geringes Gewicht, hohe Festigkeit und eine weitgehend streuungsfreie Produktqualität bei Eignung für die Massenproduktion und großer Produktvielfalt durch Aufteilung in zwei oder mehrere Teile.

Aus der DE 35 03 882 A1 ist ein Fahrzeugrad aus Stahl und ein Verfahren zu dessen Herstellung ersichtlich, bei dem Radschüssel und Radfelge mittels Klebstoff verbunden sind.

Eine weitere Felge für Fahrzeuge geht aus der DE OS 20 26 709 hervor, gemäß der ein Radkranz aus Stahlblech und eine Radschüssel aus leichtem Metall mittels Kleber verbunden sind.

Sämtliche vorgeschlagenen Felgenräder, wie z.B. Befestigungsvorrichtungen. Adapter etc. lösen jeweils Teilprobleme, wie die Kombinationsmöglichkeiten von unterschiedlichen Räderkonstruktionen mit unterschiedlichen Fahrzeugen, Lagerhaltung usw., weisen jedoch, jedes für sich, verschiedene Nachteile auf, wie z.B. übliche Verbindungsmittel und damit Lösbarkeit der Einzelteile der Felgenräder und die Manipulationsmöglichkeiten durch Unbefugte, nur beschränkte Anwendbarkeit, d.h. einerseits deren Sicherheit und andererseits eine fehlende Universalität des Einsatzes solcher Räder, was vor allem die Kombinationsfähigkeit unterschiedlicher Radtypen und Fahrzeugtypen angeht.

Hier setzt die Erfindung ein.

Die Erfindung, wie sie in den Ansprüchen beschrieben ist, löst die Aufgabe unterschiedliche Felgenräder mit unterschiedlichen Fahrzeugen so kombinieren zu können, daß die erforderliche Klemmlast erhalten bleibt, die einzelnen Radteile unlösbar fest miteinander verbunden sind und die Lagerhaltung minimiert wird.

Die mit der Erfindung erzielten Vorteile sind insbesondere die Vielzahl der durch einfache Montage erzielbaren Kombinationsmöglichkeiten und die Adaptionsfähigkeit des Rades an die unterschiedlichsten derzeit bekannten Fahrzeugtypen unter Aufrechterhaltung der Klemmlast und der Unlösbarkeit der Verbindung der einzelnen Teile des Rades. Ein weiterer Vorteil der Erfindung ist die merkliche Reduzierung der Lagerhaltung und Organisation von Montage und mögl. Kombinationen.

Die Erfindung ist nachstehend anhand eines Ausführungsbeispieles näher erläutert.

Es zeigt:
- Fig. 1: ein Felgenrad gem. der Erfindung,

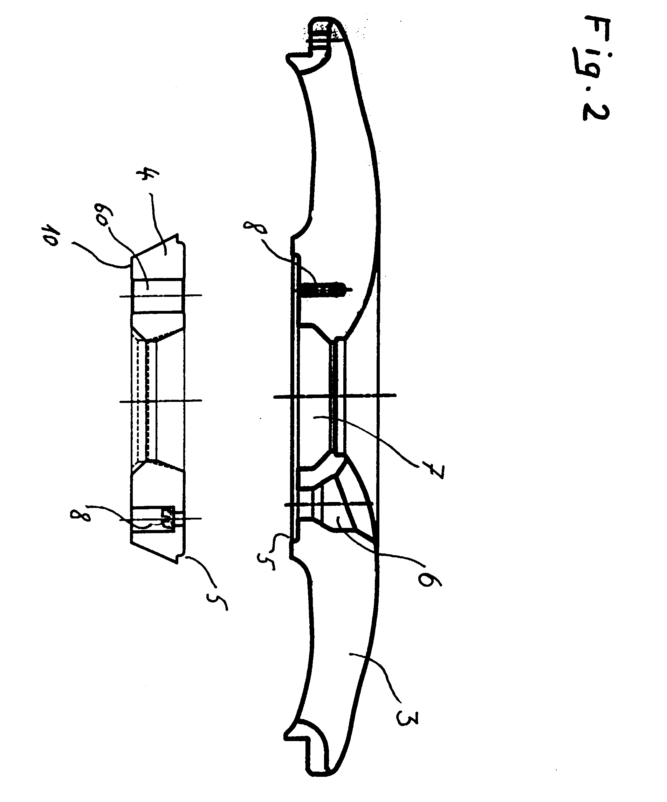

- Fig. 2: einen Schnitt durch den Radstern und

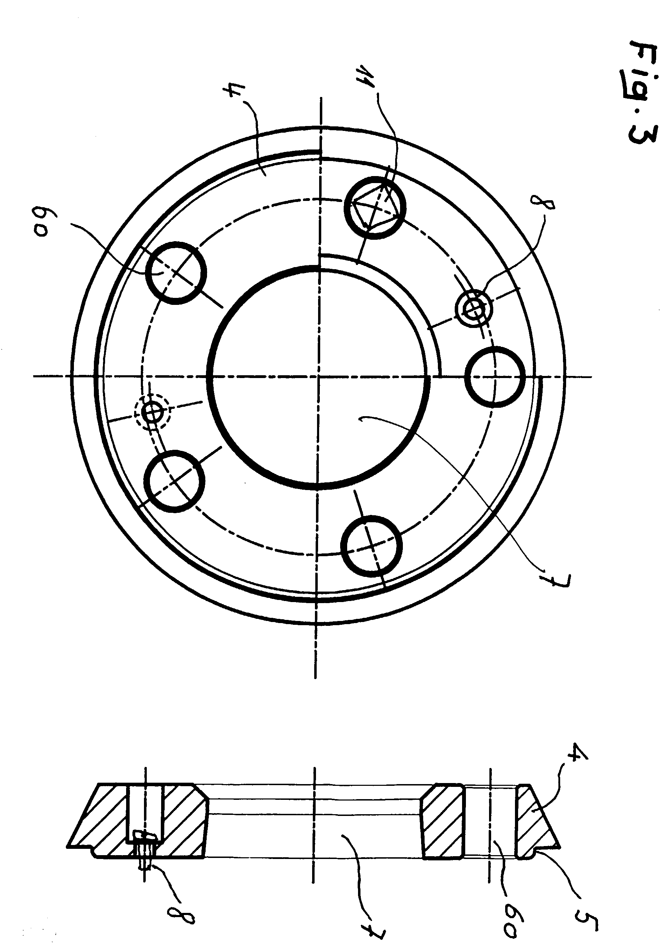

- Fig. 3: eine Draufsicht mit Schnitt des Compoundteils.

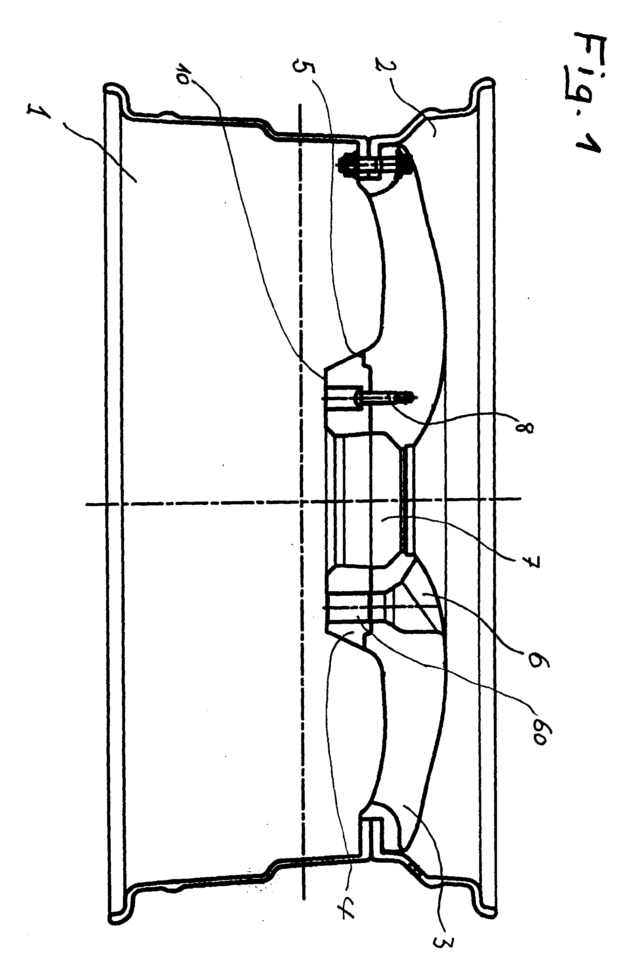

Das in Figur 1 dargestellte Rad, aus Leichtmetallguß, beispielsweise Aluminiumguß besteht im wesentlichen aus den Felgenhälften 1 und 2, eines mittig ausgeschnittenen Radsternes 3 in die ein Compoundteil 4 eingesetzt ist, wobei das Compoundteil 4 in eine rückseitige Aussparung des Radsternes 3 mit einer korrespondierenden Kontur 5 eingepaßt ist. Außerdem sind im Radstern 3 eine entsprechende Anzahl Löcher 6 für die Radschrauben 11 und eine Nabenbohrung 7 und im Compoundteil 4 Durchgangslöcher 60 für die Radschrauben 11 vorgesehen. Mit 8 sind zusätzlich angeordnete Sicherheits-Befestigungsmittel für das Compoundteil 4 beispielsweise Schrauben bezeichnet. Die Verbindung des Fahrzeugrades mit der Radanlage des Fahrzeuges geschieht durch die Radschrauben 11, die zunächst von der Radanlage durch die Durchgangslöcher 60 des Compoundteiles 4 und dann durch die Löcher 6 des Radsternes 3 geführt und mittels der üblichen Radmuttern befestigt. Somit ist eine unverlierbare Befestigung des Rades mit der Radanlage über die Verbindungsfläche 10 unter Zwischenschaltung des Compoundteiles 4 hergestellt.

Die Verbindungsflächen des Radsternes 3 und des und die des Compoundteiles 4 können auch leicht konisch ausgebildet sein und auf geeignete Weise, beispielsweise mittels der Sicherheitsbefestigungsmittel 8 unlösbar miteinander verbunden. Die Verbindungsflächen der zu verbindenden Teile des Rades können zusätzlich mit einer Verzahnung versehen sein.

Durch das mit der Erfindung vorgeschlagene Fahrzeugrad und die Kombinationsmöglichkeiten der unterschiedlicher Compoundteile 4 mit verschiedenen Felgenhälften 1,2 sowie Radsternen 3 kann sämtlichen Anforderungen an die Rad-Fahrzeugverbindung entsprochen werden, wobei die Compoundteile 4 die entsprechenden Durchgangslöcher 60 für die Radschrauben 11 in erforderlichen Lochkreisdurchmessern und die Nabenbohrung 7 in entsprechenden Durchmesser etc. aufweisen. Durch die unlösbare Verbindung des Compoundteiles 4 mit dem Radstern 3 sind sämtliche, auch sicherheitstechnischen Anforderungen an ein Fahrzeugrad erfüllt. Es können die Radsterne sowohl von Flachbett- als auch Tiefbettfelgen in ein- und/oder mehrteiliger Bauweise mit unterschiedlichsten Compoundteilen 4 kombiniert werden.

Der Radstern 3 des in den Abbildungen dargestellten Fahrzeugrades kann beispielsweise auch im Guß von innen nach außen des Radsterndurchmessers eingebrachten ovalen Löchern 6 versehen sein, so daß variable Lochkreise bei der Bearbeitung gebohrt werden können. Durch diese Massnahme decken die Lochkreise praktisch die Lochkreise jedes derzeit bekannten Personenkraftwagens ab.

Die spätere Einpreßtiefe des kompletten Fahrzeugrades wird über das Compound 4, das in die Kontur 5 auf der Rückseite des Radsterns 4 eingesetzt ist, definiert. Die Erhöhung als Gegenstück auf dem Compound ist ebenfalls mit 5 bezeichnet.

Das Compound 4 weist eine bestimmte Anzahl, beispielsweise vier oder fünf, Durchgangslöcher 60 auf, die der Aufnahme der Radschrauben 11 dienen und mit den Löchern 6 im Radstern 3 korrespondieren. Die Durchgangslöcher 60 des Compounds 4 können in Größe und Form, z.B. oval, auch so gewählt werden, daß sie mit mehreren Lochkreisen des Radsternes 3 korrespondieren. Das Compound 4 ist außerdem mit einer Nabenbohrung 7 versehen, die verschiedene Durchmesser, abhängig vom späteren Verwendungszweck, aufweisen kann. Diese Nabenbohrung 7 kann beispielsweise, falls erforderlich, auch durch sogen. Reduzierringe verkleinert werden.

Nach erfolgter Befestigung des Compounds 4 am Radstern 3, nach dem Einsetzen seiner korrespondierenden Kontur 5 in die korrespondierende Aussparung des Radsternes 3 mittels einer oder mehreren Befestigungsschrauben 8 oder dergl., die einen festen Sitz desselben im Radstern 3 gewährleisten, ist ein Lösen des Compoundteils 4 und ein Verdrehen desselben um die Achse zusätzlich verhindert. Diese Befestigungsschrauben 8 sind nach der Montage nicht mehr manipulierbar, d.h. ein Entfernen derselben ist somit, außer bei Anwendung von Gewalt, unmöglich. Ein Entfernen des Radsternes 3 vom Compoundteil ist danach nicht mehr möglich .

Das Compoundteil 4 kann, je nach späteren Verwendungszweck, in Dicke, Außendurchmesser usw. variieren.

### Bezugszeichenliste

- 1: Felgenhälfte innen
- 2: Felgenhälfte außen
- 3: Radstern
- 4: Compoundteil
- 5: Kontur
- 6: Löcher für Radschrauben
- 7: Loch für Radnabe
- 8: Sicherungsschraube
- 9: Befestigungsschrauben
- 10: Verbindungsfläche
- 11: Radschrauben

## Patentansprüche

1. Fahrzeugrad für aus Leichtmetallguß, beispielsweise aus Aluminium, das aus mehreren Teilen zusammengesetzt ist, wobei im Radstern ein zentraler Einsatz montiert ist, **dadurch gekennzeichnet, daß** auf der der Radanlage zugewandten Rückseite eines Radsternes (3) in eine Aussparung desselben ein mit einer Kontur (5) dieser Aussparung und der jeweiligen Fahrzeugradbefestigung angepaßtes Compoundteil (4) eingesetzt und mit dem Radstern (3) durch unlösbare Sicherungs-Befestigungsmittel (8) und mit dem Radstern (3) zusammen durch mehrere mit den Löchern (6) für die Radschrauben (11) korrespondierende Durchgangslöcher (60) geführte Radschrauben mit der Radanlanlage des Fahrgestelles des Fahrzeuges über ihre Verbindungsfläche (10) verbunden sind, wodurch die Einpreßtiefe des Rades definiert ist.

2. Fahrzeugrad nach Anspruch 1, **dadurch gekennzeichnet, daß** in dem Durchmesser des Radsternes (3) von innen nach außen seines Durchmessers ovale Löcher (6) derart vorgesehen sind, daß variable Lochkreise gebohrt werden können, wobei die Durchgangslöcheröcher (60) des Compoundteils (4) mit den Löchern (6) im Radstern (3) korrespondieren.

3. Fahrzeugrad nach Anspruch 6, **dadurch gekennzeichnet, daß** die Durchgangslöcher (60) in Größe und Form mit mehreren Lochkreisen des Radsternes (3) korrespondieren.

4. Fahrzeugrad nach Anspruch 1, **dadurch gekennzeichnet, daß** das Compoundteil (4) mit dem Radstern (3) verschraubt ist.

5. Fahrzeugrad nach Anspruch 1, **dadurch gekennzeichnet, daß** die Verbindungsflächen dem Radstern (3) und des Compoundteils (4) konisch ausgebildet sind.
